# EUROPEAN PATENT APPLICATION

(11) **EP 4 009 149 A1**
(43) Date of publication of application: **08.06.2022**
(21) Application number: 21020301.4
(22) Date of filing: 09.06.2021
(51) Int. Cl.: G06F 3/02, G06F 3/023, G06F 3/01

(54) **MULTIFUNCTIONAL KEYBOARD SPECIALLY FOR SIGHTED PEOPLE**

(30) Priority: 02.12.2020 IT 202000029405
(71) Applicant: Leopizzi Srl, 73011 Alezio (LE) (IT)
(72) Inventor: Leopizzi, Giacomo, 73011 Alezio (LE) (IT)
(74) Representative: Cornacchia, Pierluigi

(57) **Abstract**

The present patent application relates to the field of information technology. In particular, the invention concerns the realisation of a keyboard for digital devices (e.g., PC, tablets, smartphones, etc.) characterised by keys that can be portrayed as images on the keyboard and the management of the keys by means of a software.

## Description

On behalf of: Leopizzi Sri, represented by Mr Pierluigi Cornacchia (attorney at law) and electively domiciled at his law firm, in Via Principi di Savoia, 67 - Lecce.

### Field of the invention

The present patent application relates to the field of information technology. In particular, the invention concerns the realisation of a keyboard for digital devices (e.g., PC, tablets, smartphones, etc.) characterised by keys that can be portrayed as images on the keyboard and the management of the keys by means of a software.

### Description of the prior art

Since the use of personal computers became popular among the civil society, the keyboard and the mouse have always been the main tools that allowed the interaction between man and machine. Considering its essential role for the functioning of the interaction system, the keyboard could only be an almost complete product since its first appearence on the market. In the past five decades the keyboard's appearance remained approximately the same. The focus for the innovation of keyboards has been, in fact, the improvement of its functioning quality. The first models were the so-called membrane keyboards, which presented several problems related to their use because transmitting the inputs required significant pressure on each key, given the way such products were designed.

In the following years, the turning point in the field was reached with the introduction of mechanical keyboards. Thanks to a spring system, it was possible to obtain a product with an actuation force (force required to press a key and close a circuit) considerably reduced in comparison with the prior model and furthermore reduced the noise produced by the keys when pressed to type or in general provide inputs to the computer. Finally, in recent years, laser keyboards have been developed, which do not consist in a hardware device anymore, yet they rather use a laser in order to project the keyboard on the surface, and such laser is capable of detecting the hands movements by means of a movement sensor and consequently, after determining what key has been pressed, it sends the input to the system.

The same degree of innovation cannot be claimed with regards to the typewriting aspect. The organisation of the characters has in fact for the largest part remained unchanged in time. This particular circumstance is fairly explained by the necessity to create a universal keyboard, which certainly does not help differentiated categories of users. In light of this matter, some efforts were displayed with the introduction of more personalised keyboards, such as the "QUERTY", "QWERTZ", "QZERTY", "AZERTY" and "C'HERTY" ones, which differ for the position of certain letters, for example, in order to allow a German user to use the QWERTZ keyboard, instead of the QWERTY one, because in the German language the Z is more common than the Y, therefore the former type results as more practical than the latter. This change is however limiting, since each individual follows its own way of typing, which cannot be limited to the replacement of a single letter on the keyboard or the fact that a keyboard could display alphanumeric characters in different international languages.

With regards to the known art, there are some patent applications, for example the one under n. US2020272244A1, which uses a reflecting system, placed inside the keyboard, that projects the selected character on the keys by means of a system of lights and was previously described in a layout. There are numerous other patents that deal with the project of a keyboard in which the traditional keys are replaced by small screens where the main functions of the keys can be registered, which nevertheless carries excessive weight and costs. Furthermore, there are other keyboards, for example like the ones described in WO0173744, US5336002 and WO2007137478, that suggest a layout according to which basic function keys are placed or duplicated in a different position, obtaining, for example, that they are all located at the centre of the keyboard, below or on the sides of the space bar, in order to appear more ergonomical or more practical. These inventions however differ from the purposes of the invention described in the present application. The task of the present invention is to create a keyboard that is both light and easy to use, thanks to the chance of personalising it.

### Description of the invention

The keyboard is based on a laser system, placed in specific areas below it, that releases the images that will later be sent to the keys through a reflecting system (made of mirrors or prisms) and that will be visible on the surface of each key.

In order to better understand its functioning, it is useful to start from what happens in the software used to set the different layouts meant to be sent to the keyboard for the purpose of being memorised and projected. At the moment of the software's initiation, a standard keyboard (1) is represented, and it is possible to reconfigure the position of the keys, thanks to the the so-called *remapping* (2). It is possible to create personalised layouts on the basis of the foreseen use of the product. It will be sufficient to select the characters, each of which is identified with its own number, and replace the ones included in the standard keyboard. At the same time, it will be possible to create new characters, for example the function "copy" - in a certain numeric position -, to which the composition "Ctrl + c" will be assigned.

Furthermore, a specific sound can be associated with a key, and it will be played by the system the keyboard is connected to. This feature makes the keyboard suitable for sighted people, thanks to a tool which is different from the more traditional keyboards equipped with Braille keys and exploits the hearing rather than the touch of the user. The sounds will guide sighted people to the correct typing of the keys.

Following these procedures, keys will be available in different positions, functions normally expressed by a combination of keys will be gathered in a single one (for example, Ctrl + C for "copy") and keys with different sounds can be programmed, as previously illustrated.

Once the layout is decided, the next step is sending it to the keyboard through a cable that connects the keyboard to the pc. Each of the real keys is reconfigured in light of the new functions. This is what happens in the *remapping* phase. The last step is to display the characters on the keys.

The keyboard is designed to contain a series of lasers inside, placed under the keys, whose task is to issue the characters configured in the previous steps (7) according to the position of the lasers.

Each of the lasers will release an image within the space it is assigned to (8), that consists in part of the alphanumeric characters that were not previously set to be issued.

The emission of these characters will be sent to the reflecting surfaces (either mirrors or prisms) with a certain angle, and they will reflect the laser image towards the corresponding keys. To each key will therefore correspond a character previously configured by the software.

If the user wishes to change the layout, the modifications will involve once again the software, by selecting another layout previously configured or creating a new one.

This way, a personalised keyboard according to every different use will be available, allowing an easy change of language with original characters (5), a more comfortable placement of the characters on the keyboard according to the typing features of the user, as well as an increased ergonomicity of the system. In conclusion, it is important to underline the advantages for sighted people, thanks to the acoustic customization of each key.

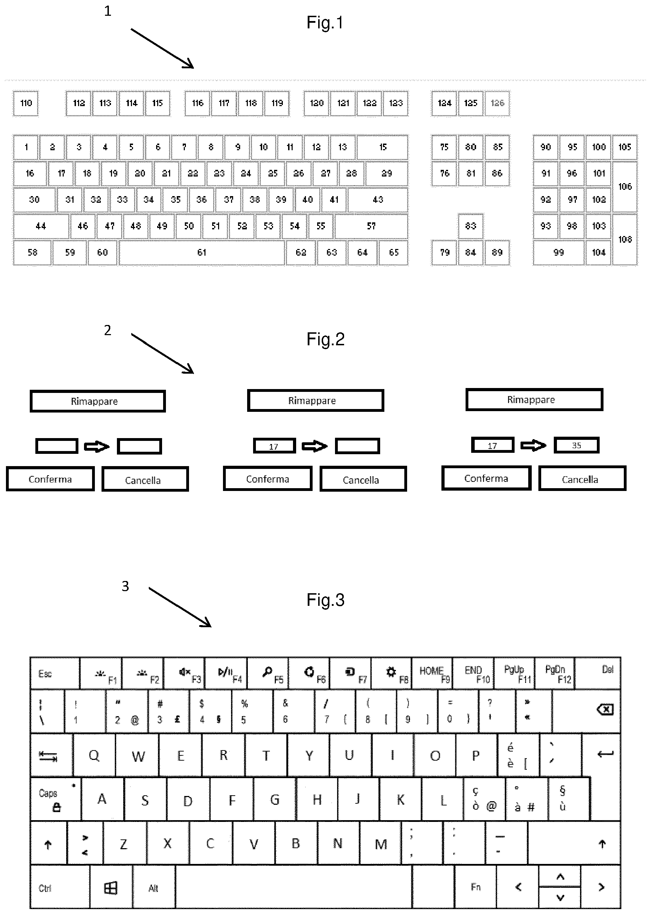

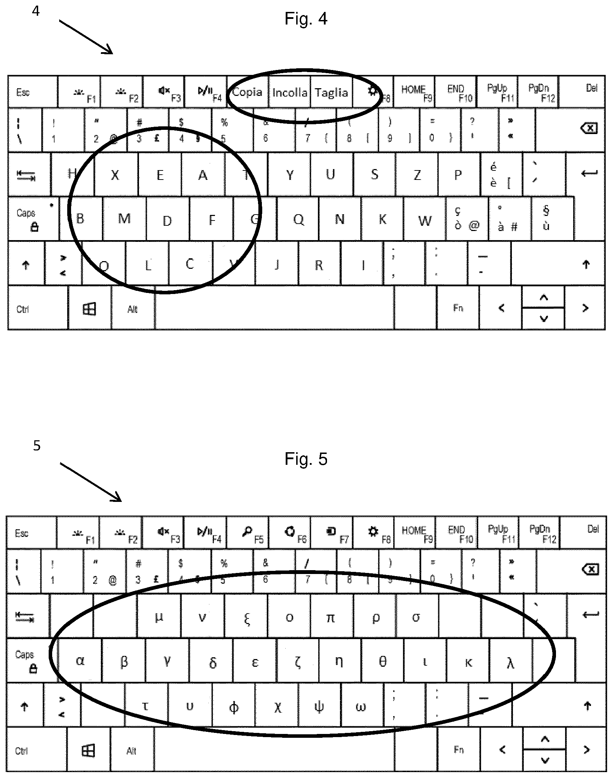

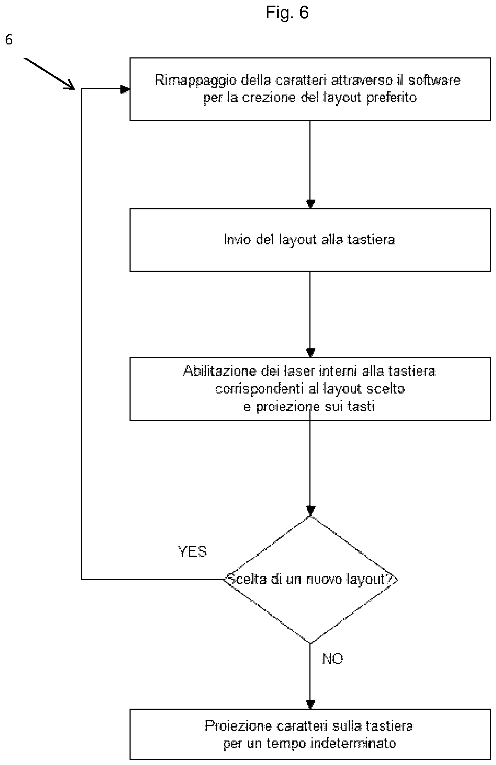

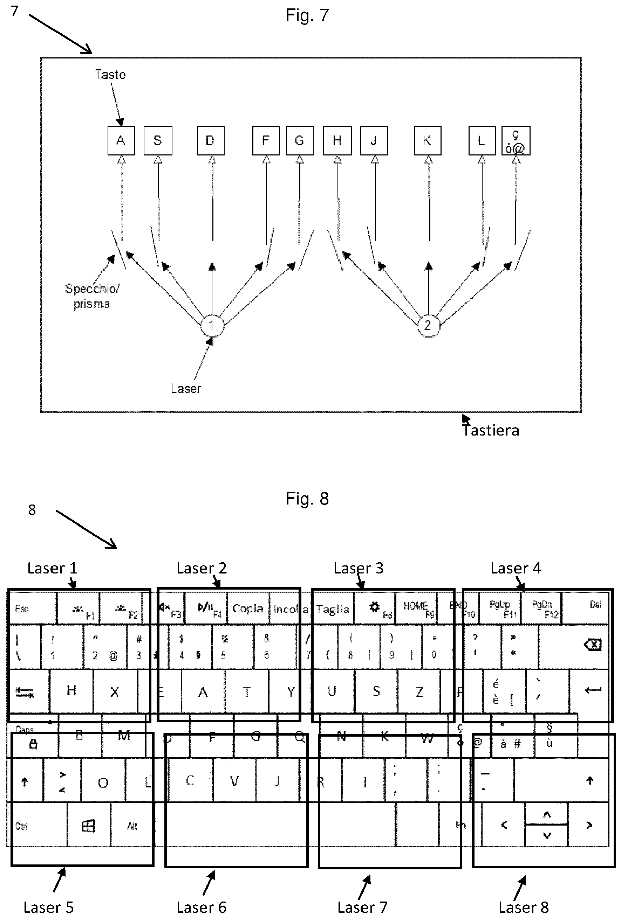

## Claims

1. Computer keyboard **characterized by** the fact that the keys that compose it can be remapped (2,3,4), i.e. distributed at will and in the most preferred position, first through a software and then on the physical keyboard.

2. Computer keyboard according to the preceding claim, **characterized by** the fact that the use of the software allows either to change the position of the keys and to create new characters to be associated with the keys (4) which are the composition of one or more keys (i.e. Ctrl + C for the new Copy key).

3. Computer keyboard according to the preceding claims comprising each key **characterized by** the fact that it can be customized with a distinctive sound with respect to the other keys and differs from the others.

4. Computer keyboard according to claim n. 3 **characterized by** the fact that the introduction of a sound for each single key allows you to change the approach to typing, making the typing itself not a procedure for its own sake but marked by a melody.

5. Computer keyboard according to the preceding claims **characterized in that** the different configurations of the virtual keys created in the different layouts are projected into the real keys, through a laser system (7) and reflectors (mirrors or prisms) where the image on the keyboard of the various keys set in the software take shape on the keyboard and then on the keys by means of the projection of the laser beams arranged under the surface of the keyboard (8) which are sent to the reflectors and then to the keys to be visible.

6. Computer keyboard according to the previous claims, **characterized by** the fact that it allows different international users to change the letters that are present in conventional keyboards with those of the alphabet of their own country (5).
